# EUROPEAN PATENT SPECIFICATION

(11) **EP 2 318 205 B1**
(45) Date of publication and mention of the grant of the patent: **21.03.2012**
(21) Application number: 09790862.8
(22) Date of filing: 28.07.2009
(51) Int. Cl.: B32B 5/18, B32B 27/38, B62D 29/00

(54) **TOUGHENED EXPANDABLE EPOXY RESINS FOR STIFFENING AND ENERGY DISSIPATION IN AUTOMOTIVE CAVITIES**
GEHÄRTETE EXPANDIERBARE EPOXIDHARZE ZUR VERSTEIFUNG UND ENERGIEDISSIPATION BEI VERTIEFUNGEN IN FAHRZEUGEN
RÉSINES ÉPOXY EXPANSIBLES RENFORCÉES POUR RAIDISSEMENT ET DISSIPATION D'ÉNERGIE DANS DES CAVITÉS AUTOMOBILES

(30) Priority: 29.07.2008 US 84396 P
(43) Date of publication of application: 11.05.2011
(73) Proprietor: Dow Global Technologies LLC, Midland, MI 48674 (US)
(72) Inventor: GOLDEN, Michael, R., Waterford MI 48329 (US); BIS, Raymond, F., Ortonville MI 48462 (US); MIRDAMADI, Mansour, Auburn Hills MI 48326 (US); TUDOR, Jay, M., Goodrich MI 48438 (US)
(74) Representative: Hull, John Philip
(86) International application number: PCT/US2009/051891
(87) International publication number: WO 2010/014565

(56) References cited:
- EP-A- 1 072 647
- EP-A- 1 728 825

## Description

This application claims priority from United States Provisional Application No. 61/084,396, filled 29 July 2008.

This invention relates to frame structures for vehicle bodies, which are at least partially filled with an expanded, toughened epoxy adhesive.

Expanded polymers are used in many vehicular applications. The characteristics of these materials vary enormously depending on the particular function they are called on to perform in those applications. Some expanded polymers are used in seating applications. These tend to be low density polyurethane foams with low compressive strengths and high elasticity. Other expanded polymers are used in automotive interior components such as steering wheels, instrument panels, dash board, and the like, in part to provide injury abatement in the event of a collision. These also tend to be rather low density materials that have low to moderate compressive strengths and moderate to high elasticity. Soft polymer foams are also used in automotive headliners to provide some cushioning and, more importantly, to provide acoustical dampening. Foams of these types tend to be manufactured as a separate part or subcomponent which is affixed to the vehicle during assembly.

Other expanded polymers are used to fill cavities in automotive parts. This is done mainly to control penetration of fluids into or through the cavity, where they can cause damage (such as rusting in the case of water). In some cases, this is done to reduce noise and vibration. These expanded polymers are often polyurethane- or epoxy-based materials which are in many cases expanded in place. Some expandable polyolefins are sometimes used in these applications, too. A pasty or low-melting solid precursor composition is applied where the expanded polymer is needed, and heat is applied to expand and cure the composition to form the foam. The mechanical properties of these materials are usually of minor importance, provided that the material expands sufficiently and adheres well to the adjacent components. High expansions (1000% or more) are usually wanted to fill as much space as possible at the lowest raw material cost.

Expanded polymers are also used in stiffening applications. The expanded polymer is inserted into the cavity of a metal structure and makes the structure stiffer. This allows less metal to be used in the structure. In effect, part of the metal is replaced by the lower density expanded polymer and the overall part weight is reduced. Expanded polymers used in stiffening application tend to be higher density materials than those used in cushioning, injury abatement, cavity sealing and acoustical applications.

Expanded polymers used in stiffening applications can be premanufactured or foamed in place. In the first case, the expanded polymer is prepared in a foaming process, and often is fabricated to a part-specific shape. The expanded polymer is then assembled into the specific part which it is designed to stiffen. Here, densities are commonly in the 80 kg/m³ to 700 kg/m³ range. In the second case, a thermally expandable polymer composition is provided at the location where stiffening is required, and the polymer composition is heated to thermally expand and cure it. Densities here are typically in the 300 kg/m³ to 700 kg/m³ range. These expandable polymers are almost always based on epoxy resins.

Each of these approaches has its problems. The use of a premanufactured foam requires multiple process steps to form the foam, shape it into the needed geometry, and assemble it to the vehicle. It is necessary to secure the premanufactured foam to the part. This can be done using a variety of mechanical fasteners. However, a preferred way is to apply another expandable polymer composition to the surface of the premanufactured foam, and to thermally expand that polymer composition to fill gaps between the premanufactured foam and the metal structure and to provide good adhesion between them. This of course requires still more process steps.

Foam-in-place methods can be used to fill cavities of various sizes, and are often used fill small gaps (up to about 12 mm and more typically up to about 8 mm wide) between structural and/or reinforcing members and to adhere those members together. A significant drawback to the foam-in-place method is that the expandable polymer is in the form of a solid material that must be placed and held at the place it is needed until it is thermally expanded and becomes adhered to the underlying substrate. The expandable composition must be applied to one or the other members before assembling them together. This leads to additional processing steps and associated costs.

The physical properties of the expanded polymer are much more important in stiffening applications than in most of the others. According to US Patent Nos. 6,296,299 and 6,474,726, a stiffening filler material should have a compressive strength of at least 4MPa, a maximum bending strength of at least 10 MPa and a density of no greater than 1.0 g/cc. This purportedly enables the filler to transfer load from load impact side of a frame structure to the opposing "counter collision load impact side". These patents identify pine wood and an expanded "epoxy resin B" as meeting these requirements. Other materials, including polyurethane foam and an expanded "epoxy resin A" lack these characteristics.

"Stiffening" a structural member means only that the force required to distort it is increased by the presence of the stiffening material. Another property that is desired is energy dissipation, *i.e.*, the amount of work that is consumed as the part becomes distorted. The ability to dissipate large amounts of energy is very important in impact situations, as the ability of the structure to dissipate more energy can be the difference between injuring and not injuring the occupants of the vehicle. Stiffness and energy dissipation are not directly related, and a member having a higher stiffness than another often does not have higher energy dissipation.

What is desired is to provide a method for stiffening automotive structural members, in which the stiffening material can be applied easily and inexpensively and which provides for high energy dissipation in the stiffened structural member.

The present invention is in some aspects a reinforced vehicular panel. The panel has opposing first and second sides, wherein the first side faces toward an expected impact load and said second side faces away from an expected impact load, said vehicular panel having a layer of an expanded polymer adhered to said second side, wherein the expanded polymer is a thermally expanded and cured structural adhesive which expands during curing by about 150 to 350% of its original volume to form an expanded polymer having a density of from 0.3 to 1 g/cm³ and which, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

In other embodiments, the invention is a method for reinforcing a vehicular panel having opposing first and second sides, wherein the first side faces toward an expected impact load and said second side faces away from an expected impact load, comprising applying a layer of a thermally expandable and curable structural adhesive to at least a portion of said second side of the vehicular panel and subjecting said layer to an elevated temperature such that the structural adhesive expands by about 150 to 350% of its original volume and cures to form an expanded polymer layer having a density of from 0.3 to 1 kg/m³ adhered to said second side of the vehicular panel, wherein said structural adhesive, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

In certain embodiments the invention is a vehicular bodyshell structure which comprises
A) a first panel having opposing side edge portions;
B) a second panel having opposing side edge portions, connected to the opposing side edge portions of the first panel to define a cavity between the first and second panels; and
C) an expanded polymer occupying at least a portion of the cavity, wherein the expanded polymer is a thermally expanded and cured structural adhesive which expands during curing by about 150 to 350% of its original volume to form an expanded polymer having a density of from 0.3 to 1 kg/m³ and which, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

In yet another embodiment, the invention is a method for reinforcing vehicular bodyshell structure formed by a first panel having opposing side edge portions and a second panel having opposing side edge portions connected to the opposing side edge portions of the first panel to define a cavity between the first and second panels, comprising placing a thermally expandable and curable structural adhesive into the cavity and subjecting said structural adhesive to an elevated temperature such that the structural adhesive expands in the cavity by about 150 to 350% of its original volume and cures to form an expanded polymer having a density of from 0.3 to 1 kg/m³, wherein said structural adhesive, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

In any of the foregoing aspects and embodiments, the structural adhesive may be, prior to curing, a viscous liquid or paste at a temperature of 25°C. "Viscous" means that the liquid has a viscosity of at least 500 Pa·s up to 1 million Pa·s at 25°C. The structural adhesive, whether liquid or a paste, may contain suspended solids.

In any of the foregoing aspects and embodiments, the expanding agent may include a chemical blowing agent and an expandable microballoon.

In any of the foregoing aspects and embodiments, the expanded polymer may have a thickness of from 3 to 12 mm.

In any of the foregoing aspects and embodiments, a layer of an adhesive film is interposed between the layer of the expanded polymer and the vehicular panel to which the expanded polymer is adhered.
Figure 1 is a top sectional view of an embodiment of a vehicular bodyshell structure of the prior art.
Figure 1A is a top sectional view of another embodiment of a vehicular bodyshell structure of the prior art.
Figure 2 is a top sectional view of a vehicular bodyshell structure of the present invention.
Figure 3 is a top sectional view of another vehicular bodyshell structure of the present invention.
Figure 4 is a graph showing the deflection vs. load responses of three vehicular panel according to the invention and one comparative vehicular panel.
Figure 5 is a graph showing the total energy absorption of three vehicular panel according to the invention and one comparative vehicular panel.

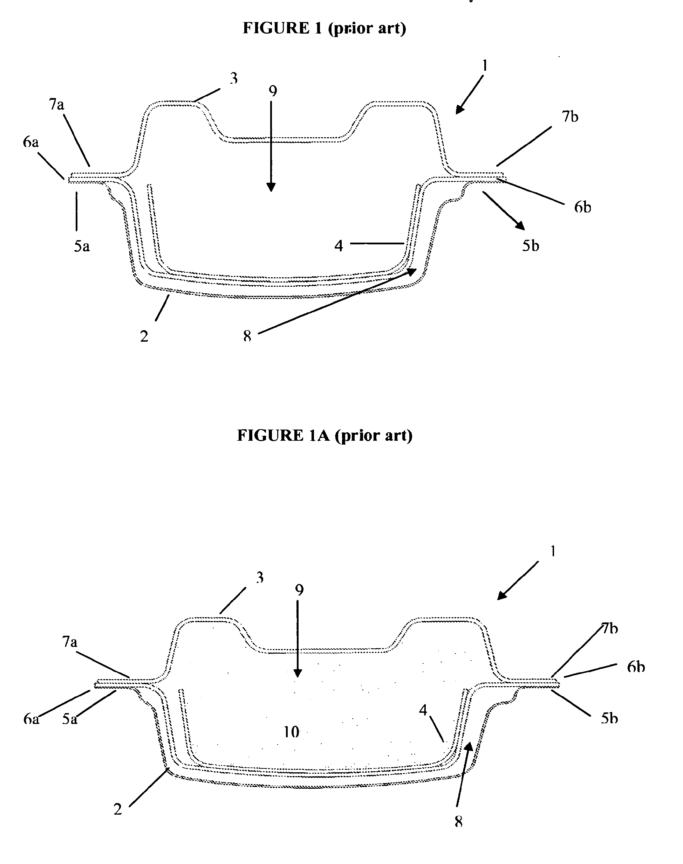

Turning to Figure 1, a typical vehicular bodyshell structure 1 includes first panel 2 having opposing edge portions 5a and 5b. First panel 2 typically represents an exterior body surface of a vehicle, i.e., the "skin" of the vehicle. Second panel 4 has opposing edge portions 6a and 6b. In the embodiment shown, vehicular bodyshell structure 1 also includes third panel 3, having opposing edge portions 7a and 7b. This construction is typical of many automotive pillars, roof rails and rockers. In those and similar vehicular parts, first panel 2 is typically a relatively thin sheet metal and/or polymeric material, which usually is chosen more for design and appearance considerations than for physical strength. Second panel 4 and third panel 3 are typically stronger materials than first panel 2, because they are thicker, because they are made from stronger materials, or both. However, the relative strength of the various panels is not critical to this invention.

First panel 2, second panel 4 and third panel 3 are joined along their respective opposing sides 5a, 6a and 7a and 5b, 6b and 7b to define cavity 8, which is the area between first panel 2 and second panel 4, and cavity 9, which is the area between second panel 4 and third panel 3. The various panels can be joined together by any suitable method, such as welding, via an adhesive bond, or via a variety of fasteners. As shown, first panel 2 and second panel 4 are spatially close to each other and cavity 8 is narrow as a result. In a vehicular bodyshell structure, cavities such as cavity 8 are often about 3 to 12 mm wide. Cavities in that range of widths are of particular interest to this invention. As shown, cavity 9 is significantly wider than cavity 8.

Figure 1A shows one prior art approach to stiffening a vehicular bodyshell panel. In Figure 1A, reference numerals 1-9 have the same meanings as in Figure 1. In Figure 1A, structural foam 10 at least partially fills cavity 9, bridging the distance between second panel 4 and third panel 3. Structural foam 10 typically is a premanufactured rigid polyurethane, which is fabricated into the approximate shape of cavity 9 and inserted therein when second panel 4 and third panel 3 are assembled together. An expandable adhesive may cover all or a portion of the surface of structural foam 10. In that case, a layer of the expanded adhesive (not shown) will be interposed between structural foam 10 and second panel 4 and/or third panel 3. In some embodiments, an expanded adhesive (not shown) may also fill all or part of cavity 8.

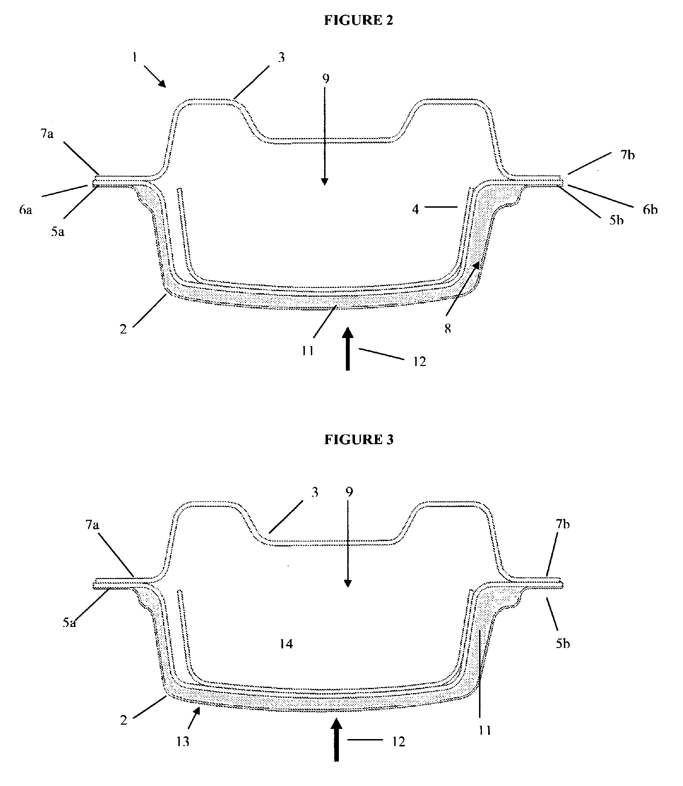

An embodiment of this invention is shown in Figure 2. Again, reference numerals 1-9 have the same meanings as in Figure 1. Here, cavity 8 is filled with a layer 11 of an expanded adhesive as described herein. As shown, cavity 9 is unfilled. In some cases, the use of the expanded, toughened polymer as described herein only to fill cavity 8 can provide sufficient energy absorption characteristics to bodyshell structure 1 that it becomes unnecessary to fill cavity 9 with a stiffener. In other embodiments, it may be possible to downgauge second panel 4 and/or third panel 3, or to manufacture them from less expensive, lower strength materials, due to the energy absorption properties contributed by the expanded polymer.

It is often unnecessary to fill the entire cavity with the expanded toughened polymer. In Figure 3, expanded polymer layer 11 fills only a portion of cavity 9, which is in this case defined by first panel 2 and third panel 3. Second panel 4 is eliminated in the embodiment shown in Figure 3, which results in a savings on part weight and manufacturing costs. In Figure 3, first panel 2 has first side 13 and opposing second side 14. First side 13 faces the direction of an expected impact load, which is indicated by arrow 12. Second side 13 faces away from the expected impact load. The expanded toughened polymer is applied to second side 14 of first panel 2, opposite from the expected impact load.

The thickness of the expanded toughened polymer layer is suitably from about 3 to about 12 mm, and more preferably from about 3 to about 8 mm.

The expanded polymer layer is formed by applying a thermally expandable and curable structural adhesive onto at least one side of at least one of the panels, and subjecting the structural adhesive to an elevated temperature such that the structural adhesive cures and expands during curing to form an expanded polymer having a density of from 0.3 to 1 g/cm³. The expanded polymer adheres to at least one of the panels. The structural adhesive expands by about 150 to 350% of its original volume. The volume of the expanded structural adhesive therefore is from 250% (100% original volume plus 150% expansion) to 450% (100% original volume plus 350% expansion), of the original volume of the structural adhesive.

The uncured structural adhesive is in most cases a liquid or paste which can flow under an applied pressure. In such cases, the structural adhesive can be applied using any method that is suitable for applying a liquid or pasty adhesive. The structural adhesive can be applied by extruding it from a robot into bead form on the substrate, it can be applied using mechanical application methods such as a caulking gun, or any other manual application means, it can also be applied using a swirl technique. The swirl technique is applied using an apparatus well known to one skilled in the art such as pumps, control systems, dosing gun assemblies, remote dosing devices and application guns.

In some cases, the structural adhesive may be a solid at 25°C. In those cases, the structural adhesive should soften at some slightly elevated temperature, such as 50°C or less, and can be heated in order to be applied at a temperature of 50°C or less in the form of a liquid or paste.

It is also possible to encapsulate the structural adhesive, such as by packaging the structural adhesive in a bag or pouch, and to fasten the encapsulated structural adhesive in position. There are several reasons why this may be preferred. Some assembly processes cannot easily accommodate the application of liquids. In other cases, capital investments may be required to install equipment for applying a liquid structural adhesive. In other situations, it may be desirable to avoid worker exposure to various chemicals present in the structural adhesive. In still other situations, the assembled part may be subjected to temperature or other conditions which can cause the structural adhesive to flow off of the part before it can expand. In that case, encapsulation provides a way to keep the adhesive in the needed position until it is expanded and cured.

The encapsulating material should melt or stretch to allow the structural adhesive to expand. Preferably, the encapsulating material is a thermoplastic material that softens or melts under the conditions of the expansion of the structural adhesive, and which adheres well to the expanded polymer layer and to the substrate. Various adhesive polymer films are preferred, in particular polymers and copolymers of acrylic acid such as ethylene-acrylic acid copolymers. The encapsulating material should have a thickness of from about 1 to 10 mils. The adhesive can be encapsulated using any convenient method, such as well-known fill and seal techniques which are commonly used to package food and other consumer products.

When the structural adhesive is encapsulated in this way, the amount of the structural adhesive that is encapsulated will in general be determined with respect to the particular part being reinforced. The amount of adhesive is selected in conjunction with cavity size to permit the structural adhesive to expand by 150 to 350% during the expansion and curing step.

Various types of mechanical fasteners can be used to affix the bag or pouch in position until the structural adhesive is cured and expanded. These include, for example, clips, so-called "Christmas tree" fasteners, hooks, magnets, and the like.

After application, the structural adhesive is thermally cured and expanded by heating to a temperature at which the curing agent initiates cure of the epoxy resin composition. Generally, this temperature is about 80°C or above, preferably about 100°C or above. Preferably, the temperature is about 220°C or less, and more preferably about 180°C or less. Many vehicular parts are coated with a coating material that requires a bake cure. The coating is typically baked at temperatures that may range from 140°C to over 200°C. In such cases, it is often convenient to apply the structural adhesive to the frame components, then apply the coating, and cure the adhesive at the same time as the coating is baked. It is also possible to apply the structural adhesive after the coating is applied. The structural adhesive may be formulated to expand and cure at the particular temperature that is used to cure the coating.

If the structural adhesive is encapsulated, the encapsulating material melts or stretches during the expansion and curing step. The encapsulating material may lose its mechanical integrity during the process, and may break or rupture in one or more places. Often, the encapsulating material will form a layer that is at least partially interposed between the substrate and the expanded structural adhesive. For that reason, the encapsulating material preferably adheres well to both the substrate and the expanded and cured structural adhesive.

The structural adhesive contains at least one non-rubber-modified epoxy resin, at least one reactive toughener as described below, and at least one rubber. As described below, the rubber may be in the form of an epoxy-terminated rubber, or in the form of a core-shell rubber, or both.

A wide range of epoxy resins can be used as the non-rubber-modified epoxy resin, including those described at column 2 line 66 to column 4 line 24 of U.S. Patent 4,734,332, incorporated herein by reference.

Suitable epoxy resins include the diglycidyl ethers of polyhydric phenol compounds such as resorcinol, catechol, hydroquinone, bisphenol, bisphenol A, bisphenol AP (1,1-bis(4-hydroxylphenyl)-1-phenyl ethane), bisphenol F, bisphenol K, tetramethylbiphenol, diglycidyl ethers of aliphatic glycols and polyether glycols such as the diglycidyl ethers of C₂₋₂₄ alkylene glycols and poly(ethylene oxide) or poly(propylene oxide) glycols; polyglycidyl ethers of phenol-formaldehyde novolac resins, alkyl substituted phenol-formaldehyde resins (epoxy novalac resins), phenolhydroxybenzaldehyde resins, cresol-hydroxybenzaldehyde resins, dicyclopentadiene-phenol resins and dicyclopentadiene-substituted phenol resins, and any combination thereof.

Suitable diglycidyl ethers include diglycidyl ethers of bisphenol A resins such as are sold by Dow Chemical under the designations D.E.R.® 330, D.E.R.® 331, D.E.R.® 332, D.E.R.® 383, D.E.R. 661 and D.E.R.® 662 resins.

Commercially available diglycidyl ethers of polyglycols that are useful include those sold as D.E.R.® 732 and D.E.R.® 736 by Dow Chemical.

Epoxy novolac resins can be used. Such resins are available commercially as D.E.N.® 354, D.E.N.® 431, D.E.N.® 438 and D.E.N.® 439 from Dow Chemical.

Other suitable additional epoxy resins are cycloaliphatic epoxides. A cycloaliphatic epoxide includes a saturated carbon ring having an epoxy oxygen bonded to two vicinal atoms in the carbon ring, as illustrated by the following structure V: 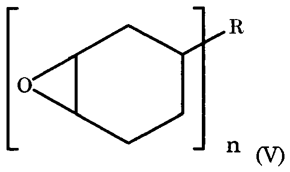 wherein R is an aliphatic, cycloaliphatic and/or aromatic group and n is a number from 1 to 10, preferably from 2 to 4. When n is 1, the cycloaliphatic epoxide is a monoepoxide. Di- or polyepoxides are formed when n is 2 or more. Mixtures of mono-, di- and/or polyepoxides can be used. Cycloaliphatic epoxy resins as described in U.S. Patent No. 3,686,359, incorporated herein by reference, may be used in the present invention. Cycloaliphatic epoxy resins of particular interest are (3,4-epoxycyclohexyl-methyl)-3,4-epoxy-cyclohexane carboxylate, bis-(3,4-epoxycyclohexyl) adipate, vinylcyclohexene monoxide and mixtures thereof.

Other suitable epoxy resins include oxazolidone-containing compounds as described in U. S. Patent No. 5,112,932. In addition, an advanced epoxy-isocyanate copolymer such as those sold commercially as D.E.R. 592 and D.E.R. 6508 (Dow Chemical) can be used.

The non-rubber-modified epoxy resin preferably is a bisphenol-type epoxy resin or mixture thereof with up to 10 percent by weight of another type of epoxy resin. The most preferred epoxy resins are bisphenol-A based epoxy resins and bisphenol-F based epoxy resins.

The non-rubber-modified epoxy resin is used in sufficient amount to impart desirable adhesive and strength properties. Preferably, the non-rubber-modified epoxy resin will constitute at least about 10 weight percent of the structural adhesive, more preferably about 15 weight percent, and most preferably about 20 weight percent. The non-rubber-modified epoxy resin preferably constitutes up to about 60 weight percent of the structural adhesive, more preferably up to about 50 weight percent, and most preferably about 40 weight percent. These amounts include amounts of non-rubber-modified epoxy resin (if any) that are brought into the composition with any core-shell rubber and any epoxy-terminated rubber as may be used.

The reactive toughener is a liquid or low-melting elastomeric material having isocyanate groups that are capped or blocked with, for example, a phenolic compound, an aminophenolic compound, a primary or secondary aliphatic or cycloaliphatic amine, a benzyl alcohol, an aromatic amine, a benzyl amine or a thiol compound. The capping or blocking group may contain additional functional groups such as phenols or aromatic amino groups, but the capping or blocking group may instead be devoid of such groups. The reactive toughener should be soluble or dispersible in the remainder of the reactive components of the structural adhesive. Tougheners of these types and methods for preparing them are described, for example, in U. S. Patent No. 5,202,390, U. S. Patent No. 5,278,257, WO 2005/118734, U. S. Published Patent Application No. 2005/0070634, U. S. Published Patent Application No. 2005/0209401 and U. S. Published Patent Application 2006/0276601. The elastomeric portion of the reactive toughener advantageously includes a polyether, polybutadiene or polyester segment. The polyether, polybutadiene or polyester segment may form part of a polyurethane and/or polyurea backbone.

The reactive toughener preferably has a viscosity at 45°C which is not greater than 1000 Pa · s and more preferably no more than about 800 Pa · s. Preferably, the weight average molecular weight of the toughener is about 8,000 or greater, and more preferably about 10,000 or greater. Preferably, the molecular weight of the toughener is about 70,000 or less, and more preferably about 40,000 or less. Molecular weights as used herein are determined according to GPC analysis.

The reactive toughener preferably contains an average of no more than 6 blocked or capped terminal groups per molecule. Preferably the average number of such groups is at least 1, more preferably at least 2, up to about 4 per molecule.

The reactive toughener is preferably non-crosslinked or lightly crosslinked, preferably having a crosslink density of about 2 or less and preferably about 1 or less. Crosslink density is the number of attachments between chains of polymers per molecule, on average.

A preferred class of reactive tougheners includes those corresponding to Formula I: 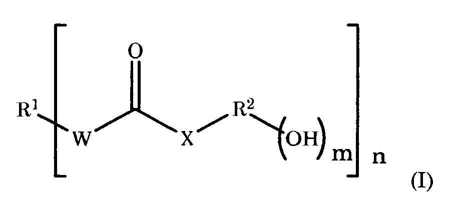 wherein m is 1 or 2, n is 2 to 6, R¹ is an n-valent radical of an elastomeric prepolymer after the removal of the terminal isocyanate, amino or hydroxyl group(s), the elastomeric prepolymer being soluble or dispersible in epoxy resin, W and X are independently -O- or -NR³-, at least one of W and X being -NR³-, R² is an m+1- valent radical of a polyphenol or aminophenol after the removal of a phenolic hydroxyl group when X is -O- and of the amino group when X is -NR³-, and R³ is hydrogen, a C₁ to C₆ alkyl or phenyl. Such tougheners are described in more detail in EP-A-0 308 664 (page 5, line 14, to page 13, line 24), and in U.S. Patent No. 5,278,257 (at column 2, lines 14 to 33 and column 4, line 19 and column 16, line 18), the disclosures of which are incorporated herein by reference.

Other suitable reactive tougheners correspond to Formula II and/or Formula III: 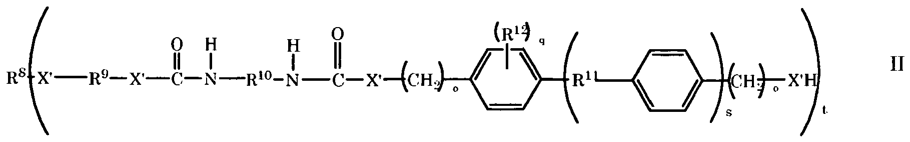 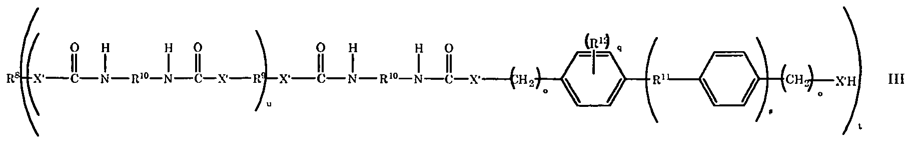 wherein R⁸ is independently in each occurrence a C₂₋₂₀ t-valent alkyl moiety; R⁹ is independently in each occurrence a polyether chain; R¹⁰ is independently in each occurrence an alkylene, cycloalkylene or mixed alkylene and cycloalkylene moiety, optionally containing one or more oxygen or sulfur atoms; R¹¹ is a direct bond or an alkylene, carbonyl, oxygen, carboxyloxy, or amido moiety; R¹² is independently in each occurrence an alkyl, alkenyl, alkoxy, aryloxy or aryloxy moiety with the proviso that if s=1, then q=0; X' is O or -NR¹³ with the proviso that X' is O where s is 1; and that where s is 0, X' is O in at least one occurrence; R¹³ is independently in each occurrence hydrogen or alkyl; t is independently in each occurrence a number of about 1 to about 6; u is independently in each occurrence a number of 1 or greater; o is independently in each occurrence 0 or 1 if s is 0 and 0 if s is 1; s is independently in each occurrence 0 or 1; and q is independently in each occurrence a number of from 0 to 1.

Still another useful class of reactive tougheners corresponds to formula IV: 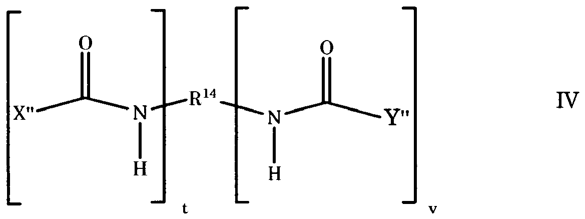 wherein R¹⁴ is the elastomeric prepolymer residue after removal of isocyanate groups, said residue having a valence of t + v = 2 to 6 with t = 1 to 6 and v = 0 to 5, X" is the residue of the primary or secondary aliphatic, cycloaliphatic, heteroaromatic and/or araliphatic amine, a thiol and/or an alkyl amide after removal of an amine or thiol hydrogen and Y" is the residue of the phenol and/or the polyphenol after removal of a phenolic hydrogen.

Preferred reactive tougheners are isocyanate-terminated prepolymers formed form a polyether polyol and an aliphatic polyisocyanate, in which the terminal isocyanate groups are blocked with a phenol, aminophenol, polyphenol or an allylphenol such as o,o-diallyl bisphenol A.

The reactive toughener is present in sufficient amount to improve the performance of adhesive compositions containing it under dynamic load. Preferably, the reactive toughener is present in an amount of about 5% by weight of the adhesive composition or greater, preferably at least about 8% by weight of the adhesive composition, more preferably constitutes at least about 12 weight percent of the adhesive composition. The reactive toughener may constitute up to 40% by weight of the adhesive composition, preferably up to about 30% by weight of the adhesive composition.

The structural adhesive also includes at least one rubber, which is in the form of an epoxy-terminated rubber, a core-shell rubber, or both. The epoxy-terminated rubber is a reaction product of an epoxy resin and at least one liquid rubber that has epoxide-reactive groups, such as amino or preferably carboxyl groups. The resulting adduct has reactive epoxide groups which can be cured further when the structural adhesive is cured. It is preferred that at least a portion of the liquid rubber has a glass transition temperature (Tg) of -40°C or lower, especially -50°C or lower. Preferably, each of the rubbers (when more than one is used) has a glass transition temperature of -25°C or lower. The rubber Tg may be as low as -100°C or even lower.

The liquid rubber is preferably a homopolymer of a conjugated diene or copolymer of a conjugated diene, especially a diene/nitrile copolymer. The conjugated diene rubber is preferably butadiene or isoprene, with butadiene being especially preferred. The preferred nitrile monomer is acrylonitrile. Preferred copolymers are butadiene-acrylonitrile copolymers. The rubbers preferably contain, in the aggregate, no more than 30 weight percent polymerized unsaturated nitrile monomer, and preferably no more than about 26 weight percent polymerized nitrile monomer.

The rubber preferably contains from about 1.5, more preferably from about 1.8, to about 2.5, more preferably to about 2.2, of epoxide-reactive terminal groups per molecule, on average. Carboxyl-terminated rubbers are preferred. The molecular weight (Mₙ) of the rubber is suitably from about 2000 to about 6000, more preferably from about 3000 to about 5000.

Suitable carboxyl-functional butadiene and butadiene/acrylonitrile rubbers are commercially available from Noveon under the tradenames Hycar^{®} 2000X162 carboxyl-terminated butadiene homopolymer, Hycar^{®} 1300X31, Hycar^{®} 1300X8, Hycar^{®} 1300X13, Hycar^{®} 1300X9 and Hycar^{®} 1300X18 carboxyl-terminated butadiene/acrylonitrile copolymers. A suitable amine-terminated butadiene/acrylonitrile copolymer is sold under the tradename Hycar^{®} 1300X21.

The rubber is formed into an epoxy-terminated rubber by reaction with an excess of an epoxy resin. Enough of the epoxy resin is provided to react with substantially all of the epoxide-reactive groups on the rubber and to provide free epoxide groups on the resulting adduct without significantly advancing the adduct to form high molecular weight species. A ratio of at least two equivalents of epoxy resin per equivalent of epoxy-reactive groups on the rubber is preferred. More preferably, enough of the epoxy resin is used that the resulting product is a mixture of the adduct and some free epoxy resin. Typically, the rubber and an excess of the polyepoxide are mixed together with a polymerization catalyst and heated to a temperature of about 100 to about 250°C in order to form the adduct. Suitable catalysts include those described before. Preferred catalysts for forming the rubber-modified epoxy resin include phenyl dimethyl urea and triphenyl phosphine.

A wide variety of epoxy resins can be used to make the epoxy-terminated rubber, including any of those described above. The epoxy resin may be the same or different from that used to prepare the rubber-modified epoxy resin. Preferred polyepoxides are liquid or solid glycidyl ethers of a bisphenol such as bisphenol A or bisphenol F. Halogenated, particularly brominated, resins can be used to impart flame retardant properties if desired. Liquid epoxy resins (such as DER™ 330 and DER™ 331 resins, which are diglycidyl ethers of bisphenol A available from The Dow Chemical Company) are especially preferred for ease of handling.

The epoxy-terminated rubber preferably constitutes at least about 4 weight percent of the structural adhesive, more preferably at least about 5 weight percent. The epoxy-terminated rubber may constitute up to about 30 weight percent of the structural adhesive, more preferably up to about 20 weight percent, and even more preferably up to about 15 weight percent.

Suitable core-shell rubbers are particulate materials having a rubbery core. The rubbery core preferably has a Tg of less than -20°C, more preferably less than - 50°C and even more preferably less than -70°C. The Tg of the rubbery core may be well below -100°C. The core-shell rubber also has at least one shell portion that preferably has a T_{g} of at least 50°C. By "core", it is meant an internal portion of the core-shell rubber. The core may form the center of the core-shell particle, or an internal shell or domain of the core-shell rubber. A shell is a portion of the core-shell rubber that is exterior to the rubbery core. The shell portion (or portions) typically forms the outermost portion of the core-shell rubber particle. The shell material is preferably grafted onto the core or is crosslinked. The rubbery core may constitute from 50 to 95%, especially from 60 to 90%, of the weight of the core-shell rubber particle.

The core of the core-shell rubber may be a polymer or copolymer of a conjugated diene such as butadiene, or a lower alkyl acrylate such as n-butyl-, ethyl-, isobutyl- or 2-ethylhexylacrylate. The core polymer may in addition contain up to 20% by weight of other copolymerized monounsaturated monomers such as styrene, vinyl acetate, vinyl chloride, methyl methacrylate, and the like. The core polymer is optionally crosslinked. The core polymer optionally contains up to 5% of a copolymerized graft-linking monomer having two or more sites of unsaturation of unequal reactivity, such as diallyl maleate, monoallyl fumarate, allyl methacrylate, and the like, at least one of the reactive sites being non-conjugated.

The core polymer may also be a silicone rubber. These materials often have glass transition temperatures below -100°C. Core-shell rubbers having a silicone rubber core include those commercially available from Wacker Chemie, Munich, Germany, under the trade name Genioperl™.

The shell polymer, which is optionally chemically grafted or crosslinked to the rubber core, is preferably polymerized from at least one lower alkyl methacrylate such as methyl-, ethyl- or t-butyl methacrylate. Homopolymers of such methacrylate monomers can be used. Further, up to 40% by weight of the shell polymer can be formed from other monovinylidene monomers such as styrene, vinyl acetate, vinyl chloride, methyl acrylate, ethyl acrylate, butyl acrylate, and the like. The molecular weight of the grafted shell polymer is generally between 20,000 and 500,000.

A preferred type of core-shell rubber has reactive groups in the shell polymer which can react with an epoxy resin or an epoxy resin hardener. Glycidyl groups such as are provided by monomers such as glycidyl methacrylate are suitable.

A particularly preferred type of core-shell rubber is of the type described in EP 1 632 533 A1. Core-shell rubber particles as described in EP 1 632 533 A1 include a crosslinked rubber core, in most cases being a crosslinked copolymer of butadiene, and a shell which is preferably a copolymer of styrene, methyl methacrylate, glycidyl methacrylate and optionally acrylonitrile. The core-shell rubber is preferably dispersed in a polymer or an epoxy resin, also as described in EP 1 632 533 A1.

Preferred core-shell rubbers include those sold by Kaneka Corporation under the designation Kaneka Kane Ace, including Kaneka Kane Ace MX 156 and Kaneka Kane Ace MX 120 core-shell rubber dispersions. The products contain the core-shell rubber particles pre-dispersed in an epoxy resin, at a concentration of approximately 25%. The epoxy resin contained in those products will form all or part of the non-rubber-modified epoxy resin component of the structural adhesive of the invention.

The total rubber content of the structural adhesive can range from as little as 1 weight percent, preferably 2.5 weight percent, to as high as 30 weight percent. The total rubber content is preferably from 4 weight percent, preferably from 5 weight percent, more preferably from 7 weight percent, still more preferably from 8 weight percent and even more preferably from 10 weight percent, to as much as 30 weight percent, preferably to 20 weight percent and more preferably 15 weight percent. Total rubber content is calculated for purposes of this invention by determining the weight of core-shell rubber (if any), plus the weight contributed by the liquid rubber portion of any epoxy-terminated rubber as may be used. In each case, the weight of unreacted (non-rubber-modified) epoxy resins and/or other carriers, diluents, dispersants or other ingredients that may be contained in the core-shell rubber product or epoxy-terminated rubber is not included. The weight of the shell portion of the core-shell rubber is counted as part of the total rubber content for purposes of this invention.

The structural adhesive further contains a curing agent. The curing agent is selected together with any catalysts such that the adhesive cures when heated to a temperature of 80°C or greater, preferably 100°C or greater, but cures very slowly if at all at room temperature (∼22°C) and temperatures up to at least 50°C. Suitable such curing agents include materials such as boron trichloride/amine and boron trifluoride/amine complexes, dicyandiamide, melamine, diallylmelamine, guanamines such as acetoguanamine and benzoguanamine, aminotriazoles such as 3-amino-1,2,4-triazole, hydrazides such as adipic dihydrazide, stearic dihydrazide, isophthalic dihydrazide, semicarbazide, cyanoacetamide, and aromatic polyamines such as diaminodiphenylsulphones. The use of dicyandiamide, isophthalic acid dihydrazide, adipic acid dihydrazide and 4,4'-diaminodiphenylsulphone is particularly preferred.

The curing agent is used in sufficient amount to cure the composition. Preferably, the curing agent constitutes at least about 1.5 weight percent of the structural adhesive, more preferably at least about 2.5 weight percent and even more preferably at least 3.0 weight percent. The curing agent preferably constitutes up to about 15 weight percent of the structural adhesive composition, more preferably up to about 10 weight percent, and most preferably up to about 8 weight percent.

The structural adhesive will in most cases contain a catalyst to promote the cure of the adhesive. Among preferred epoxy catalysts are ureas such as p-chlorophenyl-N,N-dimethylurea (Monuron), 3-phenyl-1,1-dimethylurea (Phenuron), 3,4-dichlorophenyl-N,N-dimethylurea (Diuron), N-(3-chloro-4-methylphenyl)-N',N'-dimethylurea (Chlortoluron), tert-acryl- or alkylene amines like benzyldimethylamine, 2,4,6-tris(dimethylaminomethyl)phenol, piperidine or derivates thereof, imidazole derivates, in general C₁-C₁₂ alkylene imidazole or N-arylimidazols, such as 2-ethyl-2-methylimidazol, or N-butylimidazol, 6-caprolactam, a preferred catalyst is 2,4,6-tris(dimethylaminomethyl)phenol integrated into a poly(p-vinylphenol) matrix (as described in European patent EP 0 197 892). The catalyst may be encapsulated or otherwise be a latent type which becomes active only upon exposure to elevated temperatures. Preferably, the catalyst is present in an amount of at least about 0.1 weight percent of the structural adhesive, and more preferably at least about 0.5 weight percent. Preferably, the epoxy curing catalyst constitutes up to about 2 weight percent of the structural adhesive, more preferably up to about 1.0 weight percent, and most preferably up to about 0.7 weight percent.

The structural adhesive may contain various optional components. Among these, fillers and one or more additional epoxy resins are particularly preferred.

A filler, rheology modifier and/or pigment are preferably present in the structural adhesive. These can perform several functions, such as (1) modifying the rheology of the adhesive in a desirable way, (2) reducing overall cost per unit weight, (3) absorbing moisture or oils from the adhesive or from a substrate to which it is applied, and/or (4) promoting cohesive, rather than adhesive, failure. Examples of these materials include calcium carbonate, calcium oxide, talc, coal tar, carbon black, textile fibers, glass particles or fibers, aramid pulp, boron fibers, carbon fibers, mineral silicates, mica, powdered quartz, hydrated aluminum oxide, bentonite, wollastonite, kaolin, fumed silica, silica aerogel or metal powders such as aluminum powder or iron powder. Among these, calcium carbonate, talc, calcium oxide, fumed silica and wollastonite are preferred, either singly or in some combination, as these often promote the desired cohesive failure mode. Fillers, pigments and rheology modifiers preferably are used in an aggregate amount of about 5 parts per hundred parts of adhesive composition or greater, more preferably about 10 parts per hundred parts of adhesive composition or greater. They preferably are present in an amount of up to about 25 weight percent of the structural adhesive, more preferably up to about 20 weight percent, and most preferably up to about 15 weight percent.

The structural adhesive is expandable, and for that reason contains expanding agents. The amounts of expanding agents that are used are sufficient to provide an Archimedes expansion of from 125 to 350%, preferably from 150 to 300%. Archimedes expansion is evaluated on the adhesive by applying a 0.5 inch (1.27 cm) half-round bead to a substrate, weighing the sample in air and in water, thermally expanding the adhesive without constraint by heating it to a temperature sufficient to cure the adhesive and activate the expanding agent(s), and then measuring the weight of the expanded sample in both water and air. Specific gravity and the amount of expansion are calculated from the weight measurements. Expansions in particular applications may vary due to heating regimens, physical constraints or other factors.

The expanding agent can include, for example, various chemical blowing agents, particularly the so-called "azo" types which thermally decompose to liberate nitrogen. Various azodicarbonamide products are useful, including those sold by Chemtura Corporation under the trade designation Celogen. Other useful expanding agents include expandable microballoons, such as those available from Akzo Nobel under the trade designation Expancel® and from Henkel under the trade designation Dualite®. Expandable microballoons have a plastic shell which encapsulates a gas such as a lower alkane. The plastic shell softens when heated, allowing the encapsulated gas to expand. The expandable microballoon preferably has a shell of a homopolymer or copolymer of one or more of vinylidene chloride, acrylonitrile and/or methylmethacrylate. The encapsulated gas is preferably isobutane, n-pentane or isopentane or a mixture that includes one or more thereof. The expandable microballoon, prior to expansion, preferably has an average diameter of from about 5 to 50 microns, and more preferably from 5 to 25 microns. The expandable microballoon preferably is capable of expanding to about 3 to about 5 times its original diameter, or from about 27 to 125 times its original volume, when heated to its expansion temperature. The expansion temperature of the expandable microballoon (onset of expansion) may be from about 135 to about 200°C.

Applicants have found that the choice of expanding agent plays a significant role in the ability of the expanded adhesive to expand to the extent needed and to absorb energy. Chemical blowing agents alone can provide expansion to 300% or more, but when these blowing agents are used by themselves, the adhesive rapidly loses its ability to absorb energy as the expansion increases. Therefore, the expanded adhesive has diminished energy absorption characteristics at expansions of 125% or greater, and especially of 150% or greater, when the chemical blowing agent is used by itself to expand the adhesive.

However, a combination of a chemical blowing agent with an expandable microballoon can provide greater energy absorption, at a given expansion, than do either the chemical blowing agent or and expandable microballoon by themselves. Therefore, a preferred expanding agent is a mixture of at least one chemical blowing agent, especially an azo blowing agent such as azodicarbonamide, and at least one expandable microballoon. In such a mixture, the chemical blowing agent preferably constitutes from 0.2 to 1.0, more preferably from 0.3 to 0.7, percent by weight of the adhesive composition. In such a mixture the expandable microballoons preferably constitute from 0.5 to 5, more preferably from 0.6 to 2.5 percent of the weight of the adhesive.

If desired, a structural adhesive of the invention may also contain a bisphenol component. This is especially desirable in cases in which the structural adhesive contains a liquid rubber-modified epoxy resin. The bisphenol component is any compound having two or more, preferably two, phenolic hydroxyl groups per molecule. Examples of suitable bisphenol compounds include, for example, resorcinol, catechol, hydroquinone, bisphenol, bisphenol A, bisphenol AP (1,1-bis(4-hydroxylphenyl)-1-phenyl ethane), bisphenol F, bisphenol K, bisphenol M, tetramethylbiphenol and the like. The bisphenol component can be dissolved into the structural adhesive composition or present in the form of finely divided particles. Alternatively and preferably, the bisphenol component is pre-reacted with one or more of the rubber-modified epoxy resins to advance the resin somewhat. If used, the bisphenol component is preferably used in an amount from about 3 to about 35 parts by weight per 100 parts by weight of the rubber component in the rubber-modified epoxy resin. A preferred amount is from about 5 to about 25 parts by weight per 100 parts by weight of the rubber component of the rubber-modified epoxy resin. When the bisphenol component is added directly into the structural adhesive, it usually constitutes from 0.2 to 2 weight percent, especially from 0.4 to 1.5 weight percent, of the structural adhesive.

The structural adhesive can further contain other additives such as diluents, plasticizers, extenders, fire-retarding agents, flow control agents, adhesion promoters and antioxidants. The adhesive may also contain a thermoplastic powder such as polyvinyl butyral or a polyester polyol, as described in WO 2005/118734.

The following examples are provided to illustrate the invention but are not intended to limit the scope thereof. All parts and percentages are by weight unless otherwise indicated.

Products used in the following examples are identified as follows:
Struktol™ 3604 is a reaction product of approximately 60% a liquid diglycidyl ether of bisphenol A and 40% of Hycar 1300X8 rubber (a carboxy-terminated butadiene-acrylonitrile copolymer having a Tg of about -52°C, available from Noveon). It is commercially available from Schill & Seilacher.
Struktol™ 3614 is a reaction product of approximately 60% of a liquid diglycidyl ether of bisphenol F, and 40% of Hycar 1300X13 rubber (a carboxy-terminated butadiene-acrylonitrile copolymer having a T_{g} greater than -40°C, available from Noveon). It is commercially available from Schill & Seilacher.
DER™ 330 is a liquid diglycidyl ether of bisphenol A, available from The Dow Chemical Company. It has an epoxy equivalent weight of approximately 180.
RAM 965 reactive toughener is an isocyanate-terminated polyurethane prepolymer prepared from a polyether polyol and an aliphatic diisocyanate, in which the isocyanate groups are capped with o,o-diallyl bisphenol A, and is made as described in Example 13 of EP 308 664.
Cardolite NC700 is an alkylated phenol wetting agent, available from Cardura.
Cardura™ E10 is versatic acid monoepoxy ester, available from Shell Chemicals.
Dynasilan A187 is an epoxy silane available from Evonik Industries AG, Frankfurt, Germany.
EP796 is tris (2,4,6-dimethylaminomethyl)phenol in a poly(vinylphenol) matrix.

### Examples 1-3 and Comparative Example C-1

Structural adhesives 1-3 are prepared from the base formulation set forth in Table 1. The blowing agent compositions for each of structural adhesives 1-3 are as set forth in Table 2.

**Table 1**

| Components | Parts By Weight |
|---|---|
| Struktol 3604 | 5.73 |
| Struktol 3614 | 5.73 |
| DER 330 Epoxy Resin | 45.9 |
| RAM 965 | 17.2 |
| Cardolite NC 700 | 1.97 |
| Cardura E10 | 1.13 |
| Dynasilan A187 | 0.68 |
| Colorants | 0.37 |
| Surfactant | 0.29 |
| Dicyandiamide | 5.1 |
| EP796 | 0.75 |
| Fumed Silica | 5.48 |
| Fillers | 7.18 |

**Table 2**

| Blowing agent | Structural Adh. 1 | Structural Adh. 2 | Structural Adh. 3 |
|---|---|---|---|
| Azodicarbonamide¹ | 0.5 | 0.5 | 0.5 |
| Expandable Microballoons² | 0.2 | 0.9 | 1.4 |

| | | | |
|---|---|---|---|
| ¹Celogen AZ 120, from Chemtura Corporation. ²Dualite190D from Henkel. | | | |

The ingredients in each case are mixed under vacuum for 15 minutes at approximately room temperature.

The Archimedes expansion of each of structural adhesives 1-3 is determined. They are 101%, 150% and 210%, respectively.

Test panels are assembled using each of the structural adhesives. A 4 mm layer of the structural adhesive is applied to a panel of hot dipped galvanized steel having dimensions 25 X 150 mm and 0.8 mm thickness. A 5 mm thick shim is placed at each end of the panel and another identical panel is placed on top. This creates a gap of about 1-2 mm between the top of the structural adhesive layer and the top panel.

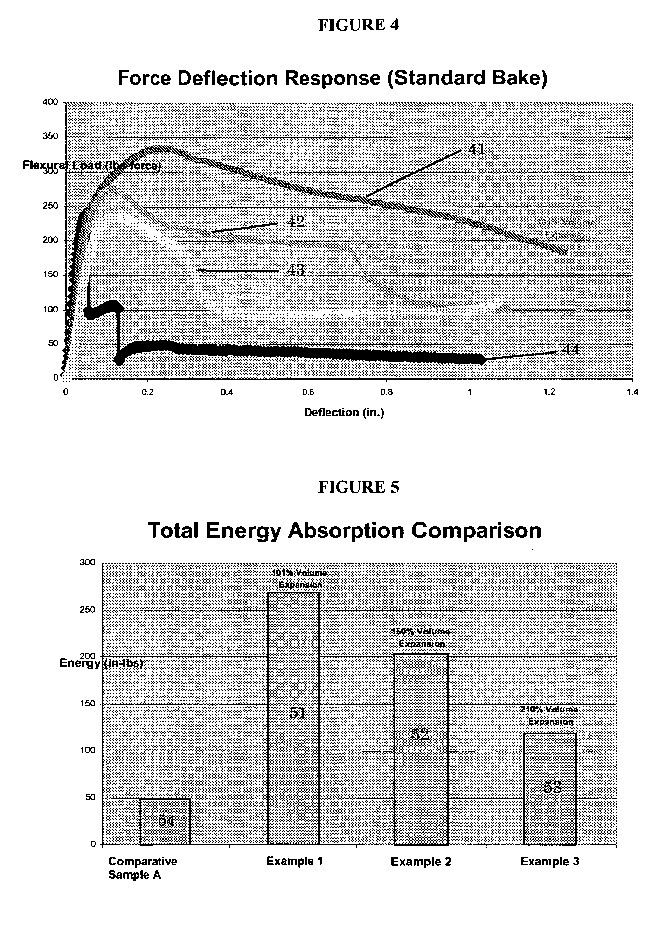

Flexural testing is performed using a three-point bend test based on ASTM D790M. The span is 8 cm and the test speed is 25 mm/minute. The test is continued until a total deflection of 1 inch (25 mm) is obtained. The flexural load is measured as a function of the deflection. Results are indicated graphically in Figure 4, with the curves for Examples 1, 2 and 3 and Comparative Sample A being indicated by reference numerals 41, 42, and 43, respectively. The total area under the curve in each case is integrated from deflection = 0 to deflection = 1 inch (25 mm). These results are indicated graphically in Figure 5.

Another test specimen (Comparative Sample A) is prepared using a commercially available expandable adhesive. The adhesive in this case contains a rubber but no elastomeric toughener. It has an Archimedes expansion of about 350%. Flexural testing is performing in the manner described above, and results are shown in Figures 4 (reference numeral 44) and 5 (reference numeral 54).

Figure 4 shows that Comparative Sample 1 fails at a deflection of less than 0.1 inch. A significant force is required to deflect the structure by the first 0.1 inch. At that point, the structure yields, and much less force is needed to deflect it the next 0.05 inch or so. At a deflection of about 0.15 inch, another yield point is reached, and very little force is needed to deflect the structure further.

Examples 1-3 all exhibit markedly different behavior. In each case, a yield point is reached after a deflection of 0.15 to 0.3 inches. The applied load need to reach that deflection point is comparable to that of Comparative Sample 1 or greater. After that yield point is reached, the force needed to further deflect Examples 1-3 decreases gradually. Example 2 and 3 show a second yield point at about 0.7 and 0.3 inch deflection, respectively, but these yield points are not as sharp as in Comparative Sample 3 and significant force is still required to deflect those Samples beyond those second yield points. Example 1 does not show a second yield point in this range of deflections.

The total amount of energy needed to deflect each of Examples 1-3 and Comparative Sample A to a total deflection of one inch is shown in Figure 5 (reference numerals 51-53, respectively). This is a measure of the amount of energy absorbed by the respective structures. Examples 1-3 absorb from 250% to over 500% of the energy absorbed by Comparative Sample A.

### Examples 4-9

Structural Adhesives 4-9 are prepared from the same base formulation as Examples 1-3, using blowing agents as indicated in Table 3.

**Table 3**

| Blowing agent | Azodicarbonamide¹ | Expandable Microballoons² |
|---|---|---|
| Example 4 | 0.5 | 0.6 |
| Example 5 | 0.5 | 1.2 |
| Example 6 | 0.5 | 1.8 |
| Example 7 | 0 | 1.75 |
| Example 8 | 0 | 2.35 |
| Examples 9 | 0 | 3.0 |

| | | |
|---|---|---|
| ¹Celogen AZ 120, from Chemtura Corporation. ²Dualite190D from Henkel. | | |

The Archimedes expansion of each of structural adhesives 4-9 is determined. In addition, test panels are prepared, cured at 170°C and evaluated on the three-point bend test described with respect to Examples 1-3. Results are as follows:

**Table 4**

| Example No. | Archimedes Expansion, % | Flexural Energy¹, N-mm |
|---|---|---|
| 4 | 121 | 29,200 |
| 5 | 163 | 24,400 |
| 6 | 225 | 17,400 |
| 7 | 107 | 27,600 |
| 8 | 154 | 22,300 |
| 9 | 235 | 3,500 |

| | | |
|---|---|---|
| ¹Total energy to attain a deflection of 1 inch on the three-point bend test. | | |

The data in Table 4 illustrate the benefit of using a mixture of a chemical blowing agent and expandable microballoons as the expanding agent. In both cases, flexural energy goes down with in creasing expansion. However, when the expansions are similar, as in Examples 4 and 7, 5 and 8 and 6 and 9, the adhesive expanded with the mixture of blowing agents absorbs more energy in each case. When the expansion exceeds about 200%, the energy absorption of the adhesive expanded only with the microballoons drops dramatically. This dramatic drop-off is not seen when the adhesive is expanded with the mixture of expanding agents.

### Example 10

In this example, a structural adhesive as in any of Examples 1-9 is encapsulated in an ethylene acrylic acid film. The film thickness varies from 1 to 3 mm. The encapsulated film is used to form a test specimen as in previous examples, which is cured at 170°C to expand the structural adhesive. Upon curing, the ethylene acrylic acid film melts and forms a bond to the substrate. Flexural testing is performed on the three-point bend test as before. Results from the testing indicate that the acrylic acid film has a slightly positive effect on energy absorption.

## Claims

1. A reinforced vehicular panel having opposing first and second sides, wherein the first side faces toward an expected impact load and said second side faces away from an expected impact load, said vehicular panel having adhered to said second side a layer of an expanded polymer, wherein the expanded polymer is a thermally expanded and cured structural adhesive which expands during curing by about 150 to 350% of its original volume to form an expanded polymer having a density of from 0.3 to 1 kg/m³ and which, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

2. The reinforced vehicular panel of claim 1, wherein the structural adhesive prior to curing is a liquid or paste having a viscosity of from 500 Pa · s to 1 million Pa · s at a temperature of 25°C.

3. The reinforced vehicular panel of claim 1 or 2, wherein the expanding agent includes a chemical blowing agent and an expandable microballoon.

4. The reinforced vehicular panel of claim 3, wherein the chemical blowing agent is an azo-type blowing agent and the expandable microballoon has an average particle size of from 5 to 25 microns.

5. The reinforced vehicular panel of any preceding claim, wherein the layer of the expanded polymer has a thickness of from 3 to 12 mm.

6. The reinforced vehicular panel of any preceding claim, wherein a layer of an adhesive film is interposed between the vehicular panel and the layer of the expanded polymer.

7. A method for preparing a reinforced vehicular panel according to any of claims 1-6, comprising applying a layer of a thermally expandable and curable structural adhesive to at least a portion of said second side of the vehicular panel and subjecting said layer to an elevated temperature such that the structural adhesive expands by about 150 to 350% of its original volume and cures to form an expanded polymer layer having a density of from 0.3 to 1 kg/m³ adhered to said second side of the vehicular panel, wherein said thermally expandable and curable structural adhesive contains, prior to curing, at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

8. The method of claim 7, wherein the structural adhesive is encapsulated in a thermoplastic material that softens or melts under the conditions of the expansion of the structural adhesive and which adheres to the expanded and cured structural adhesive and to the substrate.

9. The method of claim 7 or 8, wherein the vehicular panel is coated with a coating that requires a bake cure, and the coating and the structural adhesive are cured at the same time.

10. A vehicular bodyshell structure which comprises
A) at first panel having opposing side edge portions
B) a second panel having opposing side edge portions, connected to the opposing side edge portions of the first panel to define a cavity between the first and second panels; and
C) an expanded polymer occupying at least a portion of the cavity, wherein the expanded polymer is a thermally expanded and cured structural adhesive which expands during curing by about 150 to 350% of its original volume to form an expanded polymer having a density of from 0.3 to 1 kg/m³ and which, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

11. The vehicular bodyshell structure of claim 10, wherein the structural adhesive prior to curing is a liquid or paste having a viscosity of from 500 Pa ·s to 1 million Pa ·s at a temperature of 25°C.

12. The vehicular bodyshell structure of claim 10 or 11, wherein the expanding agent contains a chemical blowing agent and an expandable microballoon.

13. The vehicular bodyshell structure of claim 12, wherein the chemical blowing agent is an azo-type blowing agent and the expandable microballoon has an average particle size of from 5 to 25 microns.

14. The vehicular bodyshell structure of any of claims 10-13, wherein the layer of the expanded polymer has a thickness of from 3 to 12 mm.

15. The vehicular bodyshell structure of any of claims 10-14, wherein a layer of an adhesive film is interposed between the vehicular panel and the layer of the expanded polymer.

16. A method for preparing a reinforced vehicular bodyshell structure of any of claims 10-15, comprising placing a thermally expandable and curable structural adhesive into the cavity and subjecting said structural adhesive to an elevated temperature such that the structural adhesive expands in the cavity by about 150 to 350% of its original volume and cures to form an expanded polymer having a density of from 0.3 to 1 kg/m³, wherein said structural adhesive, prior to curing, contains at least one non-rubber-modified epoxy resin, a reactive toughener that has isocyanate groups that are blocked or capped with a phenolic compound, an aminophenolic compound, a primary or secondary aliphatic or cycloaliphatic amine, a benzyl alcohol, an aromatic amine, a benzyl amine, a hydroxyalkyl acrylate or a thiol; an epoxy-terminated rubber, a core-shell rubber or both, at least one expanding agent and one or more epoxy curing agents.

17. The method of claim 16, wherein the structural adhesive is encapsulated in a thermoplastic material that softens or melts under the conditions of the expansion of the structural adhesive and which adheres to the expanded and cured structural adhesive and to the substrate.

18. The method of claim 16 or 17, wherein the vehicular panel is coated with a coating that requires a bake cure, and the coating and the structural adhesive are cured at the same time.

## Patentansprüche

1. Verstärktes Fahrzeugpaneel mit einer ersten und einer zweiten Seite, die einander gegenüberliegen, wobei die erste Seite einer erwarteten Stoßbelastung zugewandt ist und die zweite Seite von einer erwarteten Stoßbelastung abgewandt ist, wobei das Fahrzeugpaneel eine mit der zweiten Seite verklebte Schicht eines expandierten Polymers aufweist, wobei das expandierte Polymer ein thermisch expandierter und gehärteter Strukturklebstoff ist, welcher sich während des Härtens um etwa 150 bis 350 % seines ursprünglichen Volumens ausdehnt, um ein expandiertes Polymer mit einer Dichte von 0,3 bis 1 kg/m³ zu bilden, und welcher vor dem Härten enthält: mindestens ein nicht-gummi-modifiziertes Epoxidharz, einen reaktiven Schlagzähigkeitsverbesserer (Toughener), welcher Isocyanatgruppen aufweist, die mit einer Phenolverbindung, einer Aminophenolverbindung, einem primären oder sekundären aliphatischen oder cycloaliphatischen Amin, einem Benzylalkohol, einem aromatischen Amin, einem Benzylamin, einem Hydroxyalkylacrylat oder einem Thiol blockiert oder verkappt sind; einen epoxidterminierten Gummi, einen Core-Shell-Gummi oder beides, mindestens ein Expandiermittel und ein oder mehrere Epoxidhärtemittel.

2. Verstärktes Fahrzeugpaneel nach Anspruch 1, wobei der Strukturklebstoff vor dem Härten eine Flüssigkeit oder Paste ist, welche eine Viskosität von 500 Pa·s bis 1 Million Pa·s bei einer Temperatur von 25 °C aufweist.

3. Verstärktes Fahrzeugpaneel nach Anspruch 1 oder 2, wobei das Expandiermittel ein chemisches Treibmittel und einen expandierbaren Mikroballon enthält.

4. Verstärktes Fahrzeugpaneel nach Anspruch 3, wobei das chemische Treibmittel ein Treibmittel vom Azo-Typ ist und der expandierbare Mikroballon eine mittlere Teilchengröße von 5 bis 25 Mikrometern aufweist.

5. Verstärktes Fahrzeugpaneel nach einem der vorhergehenden Ansprüche, wobei die Schicht des expandierten Polymers eine Dicke von 3 bis 12 mm aufweist.

6. Verstärktes Fahrzeugpaneel nach einem der vorhergehenden Ansprüche, wobei eine Schicht eines Klebefilms zwischen dem Fahrzeugpaneel und der Schicht des expandierten Polymers angeordnet ist.

7. Verfahren zur Herstellung eines verstärkten Fahrzeugpaneels nach einem der Ansprüche 1-6, welches umfasst: Aufbringen einer Schicht eines thermisch expandierbaren und härtbaren Strukturklebstoffs auf mindestens einen Abschnitt der zweiten Seite des Fahrzeugpaneels und Aussetzen der Schicht einer erhöhten Temperatur, derart, dass sich der Strukturklebstoff um etwa 150 bis 350 % seines ursprünglichen Volumens ausdehnt und aushärtet, um eine Schicht von expandiertem Polymer mit einer Dichte von 0,3 bis 1 kg/m³ zu bilden, die mit der zweiten Seite des Fahrzeugpaneels verklebt ist, wobei der thermisch expandierbare und härtbare Strukturklebstoff vor dem Härten enthält: mindestens ein nicht-gummi-modifiziertes Epoxidharz, einen reaktiven Schlagzähigkeitsverbesserer (Toughener), welcher Isocyanatgruppen aufweist, die mit einer Phenolverbindung, einer Aminophenolverbindung, einem primären oder sekundären aliphatischen oder cycloaliphatischen Amin, einem Benzylalkohol, einem aromatischen Amin, einem Benzylamin, einem Hydroxyalkylacrylat oder einem Thiol blockiert oder verkappt sind; einen epoxidterminierten Gummi, einen Core-Shell-Gummi oder beides, mindestens ein Expandiermittel und ein oder mehrere Epoxidhärtemittel.

8. Verfahren nach Anspruch 7, wobei der Strukturklebstoff in ein thermoplastisches Material eingekapselt ist, welches unter den Bedingungen der Expansion des Strukturklebstoffes weich wird oder schmilzt und welches an dem expandierten und gehärteten Strukturklebstoff und an dem Substrat haftet.

9. Verfahren nach Anspruch 7 oder 8, wobei das Fahrzeugpaneel mit einem Überzug beschichtet ist, welcher eine Einbrennhärtung (bake cure) erfordert, und der Überzug und der Strukturklebstoff gleichzeitig gehärtet werden.

10. Fahrzeugrohbaustruktur, welche umfasst:
A) ein erstes Paneel mit gegenüberliegenden seitlichen Randabschnitten;
B) ein zweites Paneel mit gegenüberliegenden seitlichen Randabschnitten, die mit den gegenüberliegenden seitlichen Randabschnitten des ersten Paneels verbunden sind, um einen Hohlraum zwischen dem ersten und dem zweiten Paneel zu definieren; und
C) ein expandiertes Polymer, das mindestens einen Abschnitt des Hohlraums einnimmt, wobei das expandierte Polymer ein thermisch expandierter und gehärteter Strukturklebstoff ist, welcher sich während des Härtens um etwa 150 bis 350 % seines ursprünglichen Volumens ausdehnt, um ein expandiertes Polymer mit einer Dichte von 0,3 bis 1 kg/m³ zu bilden, und welcher vor dem Härten enthält: mindestens ein nicht-gummi-modifiziertes Epoxidharz, einen reaktiven Schlagzähigkeitsverbesserer (Toughener), welcher Isocyanatgruppen aufweist, die mit einer Phenolverbindung, einer Aminophenolverbindung, einem primären oder sekundären aliphatischen oder cycloaliphatischen Amin, einem Benzylalkohol, einem aromatischen Amin, einem Benzylamin, einem Hydroxyalkylacrylat oder einem Thiol blockiert oder verkappt sind; einen epoxidterminierten Gummi, einen Core-Shell-Gummi oder beides, mindestens ein Expandiermittel und ein oder mehrere Epoxidhärtemittel.

11. Fahrzeugrohbaustruktur nach Anspruch 10, wobei der Strukturklebstoff vor dem Härten eine Flüssigkeit oder Paste ist, welche eine Viskosität von 500 Pa·s bis 1 Million Pa·s bei einer Temperatur von 25 °C aufweist.

12. Fahrzeugrohbaustruktur nach Anspruch 10 oder 11, wobei das Expandiermittel ein chemisches Treibmittel und einen expandierbaren Mikroballon enthält.

13. Fahrzeugrohbaustruktur nach Anspruch 12, wobei das chemische Treibmittel ein Treibmittel vom Azo-Typ ist und der expandierbare Mikroballon eine mittlere Teilchengröße von 5 bis 25 Mikrometern aufweist.

14. Fahrzeugrohbaustruktur nach einem der Ansprüche 10-13, wobei die Schicht des expandierten Polymers eine Dicke von 3 bis 12 mm aufweist.

15. Fahrzeugrohbaustruktur nach einem der Ansprüche 10-14, wobei eine Schicht eines Klebefilms zwischen dem Fahrzeugpaneel und der Schicht des expandierten Polymers angeordnet ist.

16. Verfahren zur Herstellung einer verstärkten Fahrzeugrohbaustruktur nach einem der Ansprüche 10-15, welches umfasst: Einbringen eines thermisch expandierbaren und härtbaren Strukturklebstoffs in den Hohlraum und Aussetzen des Strukturklebstoffs einer erhöhten Temperatur, derart, dass sich der Strukturklebstoff in dem Hohlraum um etwa 150 bis 350 % seines ursprünglichen Volumens ausdehnt und aushärtet, um ein expandiertes Polymer mit einer Dichte von 0,3 bis 1 kg/m³ zu bilden, wobei der Strukturklebstoff vor dem Härten enthält: mindestens ein nicht-gummi-modifiziertes Epoxidharz, einen reaktiven Schlagzähigkeitsverbesserer (Toughener), welcher Isocyanatgruppen aufweist, die mit einer Phenolverbindung, einer Aminophenolverbindung, einem primären oder sekundären aliphatischen oder cycloaliphatischen Amin, einem Benzylalkohol, einem aromatischen Amin, einem Benzylamin, einem Hydroxyalkylacrylat oder einem Thiol blockiert oder verkappt sind; einen epoxidterminierten Gummi, einen Core-Shell-Gummi oder beides, mindestens ein Expandiermittel und ein oder mehrere Epoxidhärtemittel.

17. Verfahren nach Anspruch 16, wobei der Strukturklebstoff in ein thermoplastisches Material eingekapselt ist, welches unter den Bedingungen der Expansion des Strukturklebstoffes weich wird oder schmilzt und welches an dem expandierten und gehärteten Strukturklebstoff und an dem Substrat haftet.

18. Verfahren nach Anspruch 16 oder 17, wobei das Fahrzeugpaneel mit einem Überzug beschichtet ist, welcher eine Einbrennhärtung (bake cure) erfordert, und der Überzug und der Strukturklebstoff gleichzeitig gehärtet werden.

## Revendications

1. Panneau renforcé pour véhicule comportant des premier et deuxième côtés opposés, dans lequel le premier côté est tourné vers une charge de choc attendue et ledit deuxième côté est tourné à l'écart d'une charge de choc attendue, une couche d'un polymère expansé étant collée audit deuxième côté dudit panneau pour véhicule, dans lequel le polymère expansé est un adhésif structural thermiquement expansé et durci qui, au cours de son durcissement, s'expanse d'environ 150 à 350 % de son volume initial pour former un polymère expansé dont la masse volumique vaut de 0,3 à 1 kg/m³, et qui, avant son durcissement, contient au moins une résine époxy non modifiée par caoutchouc, un agent renforçant réactif comportant des groupes isocyanate qui sont bloqués ou coiffés avec un composé phénolique, un composé amino-phénolique, une amine primaire ou secondaire, aliphatique ou cyclo-aliphatique, un alcool benzylique, une amine aromatique, une benzyl-amine, un acrylate d'hydroxy-alkyle, ou un thiol, un caoutchouc à terminaisons époxy, un caoutchouc à structure de type noyau-coque ou les deux, au moins un agent d'expansion, et un ou plusieurs agent(s) durcisseur(s) époxy.

2. Panneau renforcé pour véhicule selon la revendication 1, dans lequel l'adhésif structural, avant son durcissement, est un liquide ou une pâte dont la viscosité vaut de 500 Pa·s à 1 million Pa·s à une température de 25 °C.

3. Panneau renforcé pour véhicule selon la revendication 1 ou 2, dans lequel l'agent d'expansion comprend un agent d'expansion chimique et un micro-ballonnet expansible.

4. Panneau renforcé pour véhicule selon la revendication 3, dans lequel l'agent d'expansion chimique est un agent d'expansion de type azoïque et le micro-ballonnet expansible a une taille de particule moyenne de 5 à 25 micromètres.

5. Panneau renforcé pour véhicule selon l'une quelconque des revendications précédentes, dans lequel la couche de polymère expansé a une épaisseur de 3 à 12 mm.

6. Panneau renforcé pour véhicule selon l'une quelconque des revendications précédentes, dans lequel une couche de film adhésif est intercalée entre le panneau de véhicule et la couche de polymère expansé.

7. Procédé de préparation d'un panneau renforcé pour véhicule selon l'une quelconque des revendications 1 à 6, comprenant l'application d'une couche d'un adhésif structural thermiquement expansible et durcissable sur au moins une partie dudit deuxième côté du panneau de véhicule et le fait de soumettre ladite couche à une température élevée de telle manière que l'adhésif structural s'expanse d'environ 150 à 350 % de son volume initial et durcit pour former un polymère expansé dont la masse volumique vaut de 0,3 à 1 kg/m³, collé audit deuxième côté du panneau de véhicule, dans lequel ledit adhésif structural thermiquement expansible et durcissable contient, avant son durcissement, au moins une résine époxy non modifiée par caoutchouc, un agent renforçant réactif comportant des groupes isocyanate qui sont bloqués ou coiffés avec un composé phénolique, un composé amino-phénolique, une amine primaire ou secondaire, aliphatique ou cyclo-aliphatique, un alcool benzylique, une amine aromatique, une benzyl-amine, un acrylate d'hydroxy-alkyle, ou un thiol, un caoutchouc à terminaisons époxy, un caoutchouc à structure de type noyau-coque ou les deux, au moins un agent d'expansion, et un ou plusieurs agent(s) durcisseur(s) époxy.

8. Procédé selon la revendication 7, dans lequel l'adhésif structural est encapsulé dans un matériau thermoplastique qui ramollit ou fond dans les conditions de l'expansion de l'adhésif structural et qui adhère à l'adhésif structural expansé et durci et au substrat.

9. Procédé selon la revendication 7 ou 8, dans lequel le panneau de véhicule est revêtu d'un revêtement qui nécessite une cuisson, et le revêtement et l'adhésif structural sont durcis en même temps.

10. Structure de caisse de carrosserie de véhicule comprenant :
A) un premier panneau ayant des parties de bords latéraux opposées ;
B) un deuxième panneau ayant des parties de bords latéraux opposées, connectées aux parties de bords latéraux opposées du premier panneau pour définir une cavité entre les premier et deuxième panneaux ; et
C) un polymère expansé occupant au moins une partie de la cavité, dans lequel le polymère expansé est un adhésif structural thermiquement expansé et durci qui, au cours de son durcissement, s'expanse d'environ 150 à 350 % de son volume initial pour former un polymère expansé dont la masse volumique vaut de 0,3 à 1 kg/m³, et qui, avant son durcissement, contient au moins une résine époxy non modifiée par caoutchouc, un agent renforçant réactif comportant des groupes isocyanate qui sont bloqués ou coiffés avec un composé phénolique, un composé amino-phénolique, une amine primaire ou secondaire, aliphatique ou cyclo-aliphatique, un alcool benzylique, une amine aromatique, une benzyl-amine, un acrylate d'hydroxy-alkyle, ou un thiol, un caoutchouc à terminaisons époxy, un caoutchouc à structure de type noyau-coque ou les deux, au moins un agent d'expansion, et un ou plusieurs agent(s) durcisseur(s) époxy.

11. Structure de caisse de carrosserie de véhicule selon la revendication 10, dans laquelle l'adhésif structural, avant son durcissement, est un liquide ou une pâte dont la viscosité vaut de 500 Pa·s à 1 million Pa·s à une température de 25 °C.

12. Structure de caisse de carrosserie de véhicule selon la revendication 10 ou 11, dans laquelle l'agent d'expansion contient un agent d'expansion chimique et un micro-ballonnet expansible.

13. Structure de caisse de carrosserie de véhicule selon la revendication 12, dans laquelle l'agent d'expansion chimique est un agent d'expansion de type azoïque et le micro-ballonnet expansible a une taille de particule moyenne de 5 à 25 micromètres.

14. Structure de caisse de carrosserie de véhicule selon l'une quelconque des revendications 10 à 13, dans laquelle la couche de polymère expansé a une épaisseur de 3 à 12 mm.

15. Structure de caisse de carrosserie de véhicule selon l'une quelconque des revendications 10 à 14, dans laquelle une couche de film adhésif est intercalée entre le panneau de véhicule et la couche de polymère expansé.

16. Procédé de préparation d'une structure de caisse de carrosserie de véhicule selon l'une quelconque des revendications 10 à 15, comprenant les opérations consistant à placer un adhésif structural thermiquement expansible et durcissable dans la cavité et à soumettre ledit adhésif structural à une température élevée de telle manière que l'adhésif structural s'expanse dans la cavité d'environ 150 à 350 % de son volume initial et durcit pour former un polymère expansé dont la masse volumique vaut de 0,3 à 1 kg/m³, dans lequel ledit adhésif structural, avant son durcissement, contient au moins une résine époxy non modifiée par caoutchouc, un agent renforçant réactif comportant des groupes isocyanate qui sont bloqués ou coiffés avec un composé phénolique, un composé amino-phénolique, une amine primaire ou secondaire, aliphatique ou cyclo-aliphatique, un alcool benzylique, une amine aromatique, une benzyl-amine, un acrylate d'hydroxy-alkyle, ou un thiol, un caoutchouc à terminaisons époxy, un caoutchouc à structure de type noyau-coque ou les deux, au moins un agent d'expansion, et un ou plusieurs agent(s) durcisseur(s) époxy.

17. Procédé selon la revendication 16, dans lequel l'adhésif structural est encapsulé dans un matériau thermoplastique qui ramollit ou fond dans les conditions de l'expansion de l'adhésif structural et qui adhère à l'adhésif structural expansé et durci et au substrat.

18. Procédé selon la revendication 16 ou 17, dans lequel le panneau de véhicule est revêtu d'un revêtement qui nécessite une cuisson, et le revêtement et l'adhésif structural sont durcis en même temps.
